(19) Europäisches Patentamt

European Patent Office

Office européen des brevets

(11) **EP 0 998 969 B1**

(12) **FASCICULE DE BREVET EUROPEEN**

(45) Date de publication et mention
de la délivrance du brevet:
**21.07.2004 Bulletin 2004/30**

(51) Int Cl.⁷: $B01D\ 53/04$

(21) Numéro de dépôt: **99402599.7**

(22) Date de dépôt: **20.10.1999**

(54) **Installation PSA utilisant des vannes à durées de manoeuvre importantes et hétérogènes**

Druckwechseladsorptionsvorrichtung, die Ventile mit hoher und heterogener Betätigungszeit
verwendet

PSA installation using valves with high and heterogeneous operating time

(84) Etats contractants désignés:
**AT BE CH CY DE DK ES FI FR GB GR IE IT LI LU
MC NL PT SE**

(30) Priorité: **06.11.1998 FR 9814026**

(43) Date de publication de la demande:
**10.05.2000 Bulletin 2000/19**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeurs:
• **Rouge, Dominique
92240 Malakoff (FR)**

• **Chantagrel, Stéphane
30360 Cruviers Lascours (FR)**
• **Sun, Lian-Ming
91120 Palaiseau (FR)**
• **Graciannette, Céline
78000 Versailles (FR)**
• **Torre, Yves
78114 Magny Les Hameaux (FR)**

(74) Mandataire: **Pittis, Olivier et al
L'Air Liquide, S.A.,
Direction de la Propriété Intellectuelle,
75, Quai d'Orsay
75321 Paris Cedex 07 (FR)**

(56) Documents cités:
**GB-A- 2 053 020**

**Description**

L'invention concerne une installation et un procédé de type PSA, et pius particulièrement de type VSA, de séparation d'un flux gazeux, en particulier d'un flux gazeux contenant essentiellement de l'oxygène et de l'azote, tel l'air, mettant en oeuvre des vannes à durées de manoeuvre importantes-et hétérogènes.

Les gaz de l'air, tels notamment l'oxygène et l'azote, présentent un grand intérêt industriel, notamment dans les domaines de la fabrication du papier ou du verre.

Une des techniques non-cryogéniques utilisées pour produire ces gaz est la technique dite "PSA" (pour Pressure Swing Adsorption), laquelle recouvre non seulement les procédés PSA proprement dits, mais aussi les procédés analogues, tels les procédés VSA (Vacuum Swing Adsorption) ou MPSA (Mixed Pressure Swing Adsorption).

Selon cette technique PSA, lorsque le mélange gazeux à séparer est l'air et que le composant à récupérer est l'oxygène, l'oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, supérieure à 90 %, voire à 93%.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique:

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

Actuellement, les zéolites sont les adsorbants les plus utilisés dans les procédés PSA. Les particules zéolitiques contiennent habituellement des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions, c'est-à-dire, en général, par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques. A titre d'exemple, on peut citer les zéolites de type X ou LSX (Low Silica X) contenant plus de 80%, voire plus de 90% de cations métalliques, tels notamment les cations lithium, calcium et/ou zinc.

De telles zéolites sont notamment décrites dans les documents EP-A-486384, EP-A-606848, EP-A-589391, EP-A-589406, EP-A-548755, US-A-268023, EP-A-109063 et EP-A-760248.

En théorie, un cycle de procédé PSA, notamment VSA, n'est composé que d'une succession bien définie d'étapes définissant parfaitement les flux gazeux à chaque instant du cycle.

Cependant, en pratique, ces flux gazeux sont organisés par une séquence d'ouvertures et fermetures de vannes qui ne sont bien entendu pas instantanées.

Il existe ainsi des états transitoires, pendant lesquels sont mis en communication inopportune certaines parties de l'installation mettant en oeuvre le procédé.

. Ce peut être, par exemple, une entrée involontaire d'air en début de la phase de recompression à l'oxygène, laquelle affecte alors nécessairement les performances globales du procédé.

On comprend que l'homme de l'art a toujours voulu limité l'étendue de ces états transitoires en limitant au maximum, à l'échelle industrielle, les durées d'ouverture et de fermeture des vannes sur les unités PSA ou VSA, généralement à une valeur inférieure à 0.5 secondes environ.

Cette exigence apparaît d'autant plus forte que les durées des étapes du cycle de pression sont faibles.

Par ailleurs, dès lors que le procédé nécessite une mise en oeuvre d'une unité PSA ou VSA comptant plus d'un adsorbeur, c'est-à-dire par exemple deux ou trois adsorbeurs, une distribution trop large des durées d'ouverture/fermeture sur la population de vannes de l'unité PSA ou VSA peut très facilement créer d'importants déséquilibres dans le procédé et dégrader très fortement les performances.

Il est donc habituel, pour tenter de minimiser ou pallier ces problèmes, d'essayer d'obtenir des durées d'actionnement les plus homogènes possibles sur toutes les vannes de l'unité PSA.

A l'instar de l'obligation de rapidité, cette exigence est particulièrement critique pour les cycles courts, c'est-à-dire les cycles d'une durée inférieure à 60 secondes par exemple.

Jusqu'à présent, on a tenté de répondre à ces deux conditions en recherchant des vannes s'approchant le plus possible de systèmes à manoeuvre instantanée ou quasi instantanée.

Ainsi, le document US-A-4,360,362 propose un système PSA mettant en oeuvre des vannes très rapides et utilisant une commande pneumatique unique de façon à gommer toute hétérogénéité de durée de manoeuvre.

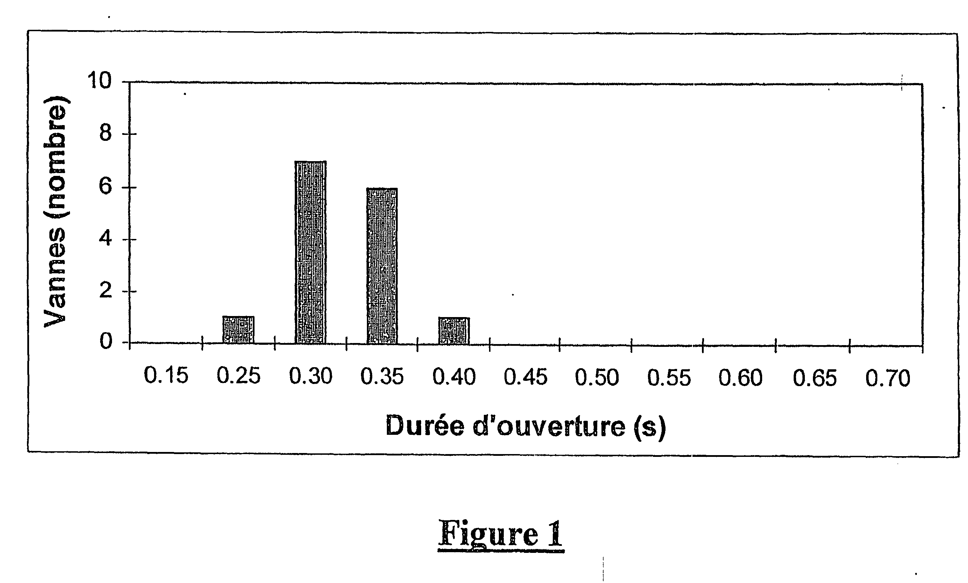

D'une manière plus générale, les unités PSA ou VSA présentent classiquement une distribution de durées de manoeuvre des vannes très étroite, autour d'une moyenne très faible, ainsi que schématisé sur la figure 1 ci-jointe, laquelle montre des distributions classiques des durées d'ouverture et de fermeture sur une unité VSA.

On voit sur la figure 1 que, classiquement, la durée moyenne d'ouverture/fermeture des vannes est égale à environ 0.30 s +/- 0.1 s.

Afin d'éviter de tels transferts ou flux gazeux non-désirés, lors des changements d'étape d'un cycle PSA, des système de contrôle des vannes ont déjà été proposés, notamment par le document US-A-4,322,228 qui impose un décalage des ordres d'ouverture/fermeture, de façon à actionner la vanne qui doit se fermer avant celle qui doit s'ouvrir ; l'objectif affiché étant ici la suppression totale des transferts transitoires.

Cependant, cette approche affecte considérablement le choix de la technologie de vannes à employer sur les unités VSA.

De là, certains documents, tels les documents US-A-4,877,429, JP-A-05192526 ou GB-A-2190014, proposent d'utiliser de nouvelles vannes, en particulier des vannes à technologie rotative permettant d'accélérer les temps de manoeuvre par rapport à ceux des vannes correspondant à des technologies plus éprouvées, comme les vannes à papillon.

Le but de la présente invention est alors de pallier les problèmes susmentionnés et de fournir une installation PSA améliorée par rapport à celle mettant en oeuvre des vannes rapides, c'est-à-dire des vannes dont les durées d'ouverture et de fermeture sont le plus homogènes possibles, ainsi que le préconise l'art antérieur.

La présente invention concerne alors une installation PSA de séparation d'un flux gazeux fonctionnant par cycle de production et comportant au moins un adsorbeur et plusieurs vannes, caractérisée en ce que la durée moyenne de manoeuvre ($\mu$) desdites vannes est telle que :

$$0.5 \text{ s} < \mu < 2 \text{ s}$$

et la durée de manoeuvre (At) de chaque vanne est telle que :

$$\mu - x < \Delta t < \mu + x \text{ avec : } 0.1\text{s}<x<0.5\text{s}.$$

Il est à noter cependant que, dans le cadre de la présente invention, on ne se préoccupe pas d'éventuelles rampes de durées d'ouverture et/ou fermeture sur toute ou partie des vannes.

Contrairement à l'enseignement de l'art antérieur, la présente invention démontre qu'une installation ou une unité industrielle mettant en oeuvre un procédé PSA, en particulier VSA, peut aisément s'accommoder de vannes plus lentes et moins homogènes que celles préconisées dans l'état de l'art.

De plus, selon l'invention, le bilan économique global du procédé PSA montre qu'il y a tout intérêt à utiliser de telles vannes, moins chères, plus fiables et à durée de vie plus importante.

Selon le cas, l'installation de invention peut comprendre l'une ou plusieurs des caractéristiques suivantes :

- la durée moyenne de manoeuvre ($\mu$) des vannes est telle que :

     $0.5 \text{ s} < \mu < 1.5 \text{ s}$, de préférence la durée moyenne de manoeuvre ($\mu$) est telle que :

     $0.5 \text{ s} < \mu < 1 \text{ s}.$

- $0.1 \text{ s} < x < 0.4 \text{ s}$, de préférence $0,1 \text{ s} < x < 0.3 \text{ s}.$
- elle comporte au moins 3 vannes, de préférence au moins 5 vannes.
- elle comporte au moins deux adsorbeurs, de préférence deux ou trois adsorbeurs.

- elle est de type VSA.
- elle comporte, en outre, des canalisations de gaz.
- elle comprend, en outre, un système de contrôle des durées de manoeuvre des vannes.
- elle comprend, en outre, un système d'adaptation de la séquence d'ordres de manoeuvre des vannes en fonction des durées de manoeuvre mesurées par le système de contrôle
- elle est du type à circulation radiale du gaz et/ou met en oeuvre un ou plusieurs adsorbants, par exemple un procédé multilits.
- le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène. L'air étant, dans le cadre de la présente invention, l'air contenu à l'intérieur d'un bâtiment ou d'une enceinte Chauffée ou non, ou l'air extérieur, c'est-à-dire dans les conditions atmosphériques, pris tel quel ou éventuellement prétraité.
- le premier composé gazeux est l'azote et le deuxième composé gazeux est oxygène; et on produit un flux gazeux riche en oxygène, c'est-à-dire comprenant, en général, au moins 90% d'oxygène.
- la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa.
- la température d'alimentation est comprise entre 10°C et 80°C, préférence entre 25°C et 60°C.

La présente invention concerne aussi l'utilisation d'une installation selon l'invention pour produire un flux gazeux comprenant plus de 50%, de préférence plus de 80%, d'au moins un gaz choisi dans le groupe formé par oxygène, l'azote et l'hydrogène.

Plus précisément, l'installation de l'invention peut être utilisée pour produire un flux gazeux comprenant plus de 80% d'oxygène, de préférence plus de 90% d'oxygène, ledit oxygène étant envoyé vers une installation consommatrice d'oxygène choisie parmi un four à combustion, une unité de fabrication de pâte à papier et une unité de traitement d'eau.

L'invention va maintenant être décrite plus en détail à l'aide d'exemples donnés à titre illustratif, mais non limitatif, et en références aux figures annexées.

De manière générale, l'étude présentée ci-après a été menée par simulation dynamique au moyen d'un programme de simulation qui repose sur les principes de conservation de la masse, de conservation de l'enthalpie, de conservation de la quantité de mouvement et utilise le modèle de la Linear Driving Force (voir "Principles of adsorption and adsorption processes", John-Wiley & Sons, 1984; D. M. Ruthven, p. 242-243; ou "Pressure Swing Adsorption", VCS Publishers, 1994, p. 58-61) pour l'évaluation de la cinétique des transferts solide-gaz au sein de la masse d'adsorbant. De tels modèles de simulation sont notamment décrits dans Pressure Swing Adsorption, Ruthven, Farooq et Knaebel, VCH Publishers, 1994, pages 172-209; et dans Fluid Flow Through Packed Columns, S. Ergun, Chem. Engr. Prog., 48(2), 89(1952). La résolution des équations peut, quant à elle, être réalisée par exemple au moyen du programme DIVPAG de la Bibliothèque Mathématique IMSL (International Mathematical & Statistical Library) commercialisé par la société Microsoft™; ou du programme ADSIM commercialisé par la société Aspentech™. L'homme du métier est parfaitement en mesure de choisir un programme de simulation adéquat parmi les nombreux programmes disponibles sur le marché et d'y introduire les données précédentes. Si besoin est, il peut également se reporter à l'article de D. G. Hartzog et S. Sircar; Adsorption, 1, 133-151 (1995), Sensitivity of PSA Process Performance to Input Variables, décrivant un programme similaire.

A des fins de simplification, l'étude consignée ci-après a été réalisée en considérant que le mélange gazeux à séparer est de l'air, que le premier composé s'adsorbant préférentiellement sur l'adsorbant est l'azote et que le deuxième composé s'adsorbant moins préférentiellement sur l'adsorbant et devant être récupéré est l'oxygène.

En outre, l'étude a été menée sur deux systèmes ou unités de type VSA, l'un à deux adsorbeurs et l'autre à trois adsorbeurs.

Le premier objectif est d'identifier la sensibilité des performances de l'unité VSA à la distribution des durées d'ouverture/fermeture des vannes de l'unité, afin de dégager, dans un deuxième temps, les distributions économiquement les plus acceptables d'un point de vue industriel.

Exemple 1 : Unité VSA à 2 adsorbeurs et 10 vannes

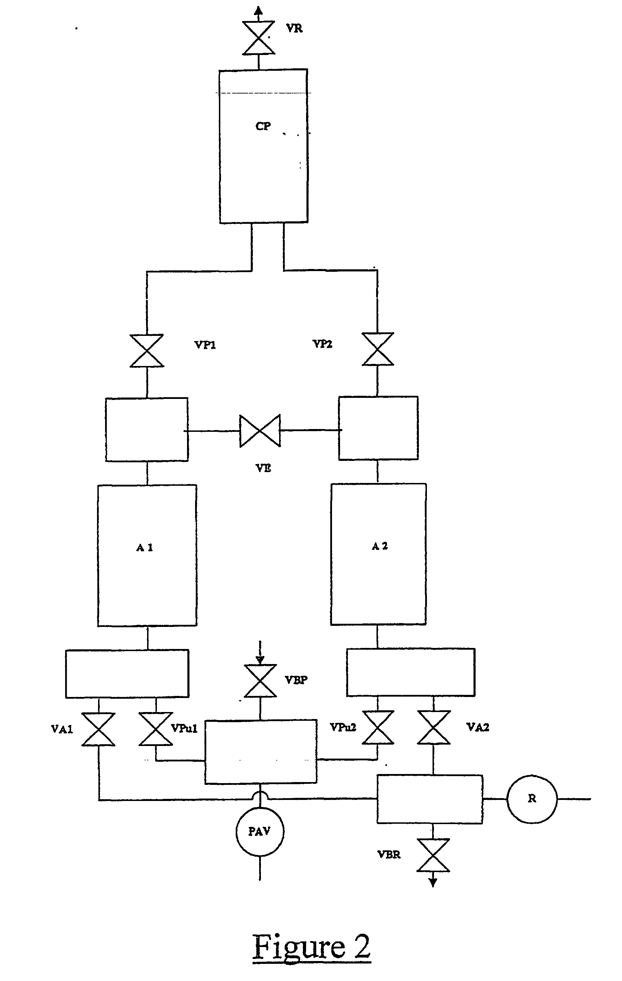

Dans cet exemple, le système VSA modélisé met en oeuvre deux adsorbeurs A1, A2 et dix vannes, ainsi que schématisé sur la figure 2.

Plus précisément, ce système VSA est représenté en figure 2 et comporte :

- 2 adsorbeurs A1 et A2 ;

- 1 pompe à vide PAV ;
- 1 compresseur R à air ou "roots" ;
- 2 vannes d'alimentation VA1 et VA2 contrôlant l'entrée d'air dans les adsorbeurs A1 et A2, respectivement ;
- 2 vannes de production VP1 et VP2 contrôlant la sortie de gaz (oxygène) des adsorbeurs A1 et A2, respectivement, lors des phases de production;
- 2 vannes de purge VPU1 et VPU2 contrôlant la sortie de gaz (azote) des adsorbeurs A1 et A2, respectivement, lors des phases de purge ;
- 1 vanne VE d'équilibrage et d'élution ;
- 1 vanne réseau VR de communication avec le réseau de distribution du gaz produit ;
- 1 vanne de by-pass VBP de la pompe à vide PAV ;
- 1 vanne de by-pass VBR du compresseur R ; et
- une capacité de production CP.

Chacune des 10 vannes du système VSA de la figure 2 est caractérisée par des durées d'ouverture et fermeture (O/F), qui constituent les paramètres de l'étude.

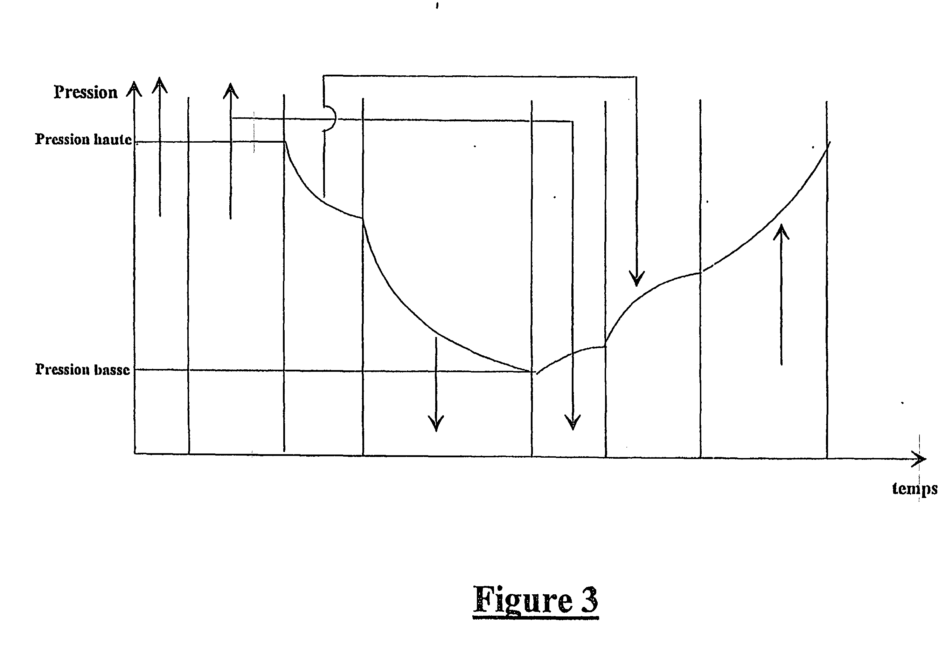

Le système VSA est soumis au cycle de pression schématisé sur la figure 3, laquelle représente les variations de pression (P) entre la pression haute du cycle (Phaute) et la pression basse du cycle (Pbasse), et les flux gazeux entrant et sortant de chacun des adsorbeurs A1 et A2, au cours du temps.

Il va de soi que les durées de manoeuvre des vannes, non nulles, affectent les flux gazeux lors des transitions, d'une étape à l'autre.

Une première série de simulations ayant été réalisées à cycle de pression constant a permis de déterminer la latitude dont on peut disposer lors de l'optimisation d'un cycle et de l'établissement des données de dimensionnement pour les unités industrielles.

Ainsi, pour un cycle de production de 74 s, les performances de l'unité VSA sont inchangées jusqu'à une durée d'ouverture/fermeture (O/F) de 2 s, alors que, pour un cycle de 40 s, la limite se situe à 1 secondes.

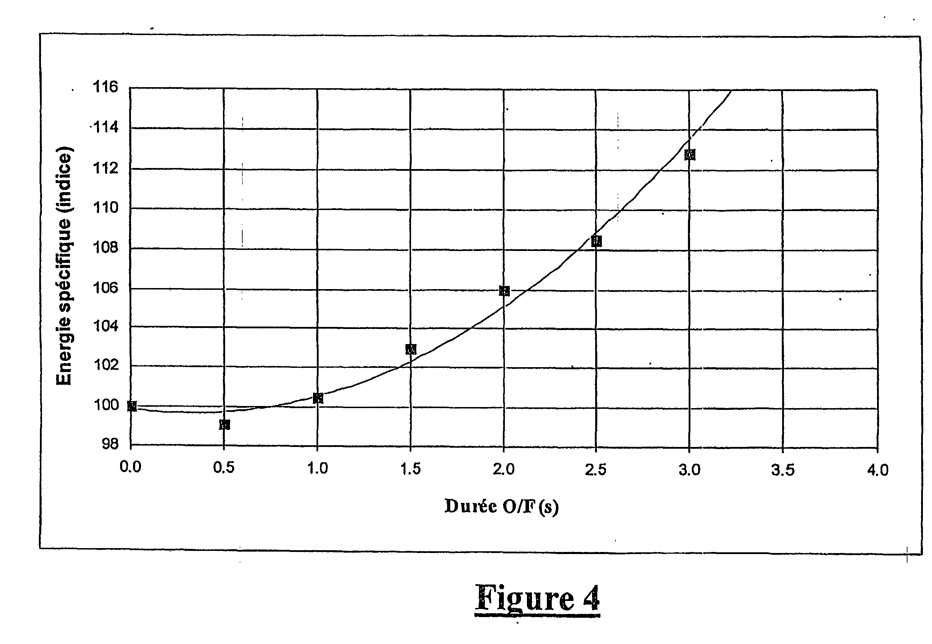

La figure 4 illustre, à titre d'exemple, l'évolution de l'énergie spécifique (ES) indicée, à cycle donné, lorsque varient les durées de manoeuvre, c'est-à-dire d'ouverture et/ou de fermeture (O/F), des vannes dans le cas d'un cycle de 40 s.

Cette figure 4 permet à l'opérateur d'optimiser le cycle, selon le cas, à 0 s, 0.5 s ou 1.0 s, de manière à fournir indifféremment les données de dimensionnement pour toute unité industrielle.

Cependant, à ce stade, aucune distribution "déséquilibrée" de durées - d'actionnement n'a été considérée ; cela va être réalisé ci-après.

On suppose maintenant que l'opérateur a réalisé un dimensionnement d'une unité VSA pour des vannes ayant toutes une durée d'ouverture/fermeture (O/F) de l'ordre de 0.5 s, mais que l'unité industrielle ainsi dimensionnée présente finalement une population de vannes aux durées d'actionnement supérieures et/ou hétérogènes.

Un tel système VSA du type à " machines et adsorbeurs " donné va être étudié sur la base des hypothèses suivantes :

- point de dimensionnement d'un cycle de 40 secondes réalisé avec des vannes s'actionnant en 0.5 secondes ; et
- unité industrielle utilisant des vannes ayant des durées d'ouverture/fermeture de 1 secondes +/- 0.5 secondes.

En considérant l'ensemble des combinaisons, a priori, les plus défavorables, c'est-à-dire conduisant aux déséquilibres les plus marqués possibles sur les vannes propres à chacun des adsorbeurs ou à une durée d'actionnement moyenne supérieure à 1 secondes, il apparaît que, si la séquence d'étapes n'est pas modifiée, les performances peuvent être très fortement dégradées, ainsi que le montrent clairement les résultats consignés dans le tableau I ci-après.

<u>Tableau 1</u> : Impact de la distribution des durées d'O/F sur les performances de l'unité VSA sans modification de la séquence de vannes

| Durée d'ouverture / fermeture des vannes (en secondes) | | | | | | Indice de production | Indice de ES |
|---|---|---|---|---|---|---|---|
| VA1 / VA2 | VP1 / VP2 | VPU1 / VPU2 | VE | VBP | VBR | | |
| 0.5 | 0.5 | 0.5 | 0.5 | 0.5 | 0.5 | 100 | 100 |
| 1 | 1 | 1 | 1 | 1 | 1 | 97 | 102 |
| 1.5 | 1.5 | 1.5 | 1.5 | 1.5 | 1.5 | 98 | 104 |
| 1 | 1 | 0.5/1.5 | 1 | 1 | 1 | 88 | 114 |
| 1 | 1 | 1.5 | 1 | 1.5 | 1 | 95 | 105 |
| 0.5/1.5 | 1 | 1 | 1 | 1 | 1 | 95 | 105 |
| 1.5 | 1 | 1 | 1 | 1 | 1.5 | 97 | 104 |
| 1.5 | 1 | 1.5 | 1 | 1.5 | 1.5 | 95 | 106 |
| 1.5/0.5 | 1 | 0.5/1.5 | 1 | 1 | 1 | 82 | 121 |
| 0.5/1.5 | 1 | 0.5/1.5 | 1 | 1 | 1 | 96 | 105 |
| 1.5/0.5 | 0.5/1.5 | 0.5/1.5 | 1 | 1 | 1 | 81 | 124 |

Il ressort du tableau I que le déséquilibre sur les vannes de purge (VPU1 et VPU2) est particulièrement préjudiciable.

Le pire des cas semble être celui combinant des déséquilibres à la fois sur les vannes de purge (VPU1 et VPU2) et d'alimentation (VA1 et VA2), et entre les vannes de purge (VPU1 ou VPU2) et alimentation (VA1 ou VA2) d'un même adsorbeur (A1 ou A2), étant donné qu'il se crée alors des transferts gazeux indésirables, notamment lors de l'équilibrage.

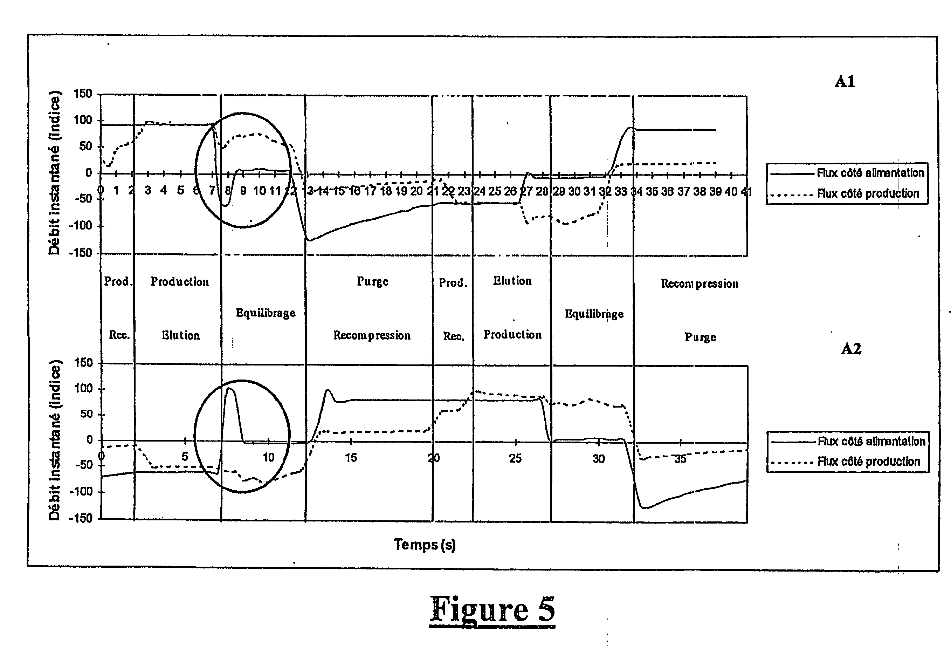

La figure 5 illustre ce phénomène dans chacun des adsorbeurs A1 et A2, dans le cas où l'on obtient une énergie spécifique (ES) indicée de 121 (voir tableau I), en schématisant l'impact de la distribution des durées d'ouverture et de fermeture (O/F) des vannes sur les débits instantanés et ce, pour chaque phase du cycle et pour les deux adsorbeurs A1 et A2.

On voit nettement sur les courbes de la figure 5 (zones encerclées) que les transferts indésirables de gaz engendrent des déséquilibres préjudiciables aux performances de l'unité PSA à 2 adsorbeurs.

Toutefois, il est possible, pour chacune des combinaisons de vannes, de s'affranchir de ces perturbations des transferts de matière en modifiant légèrement la séquence d'ouverture/fermeture des vannes.

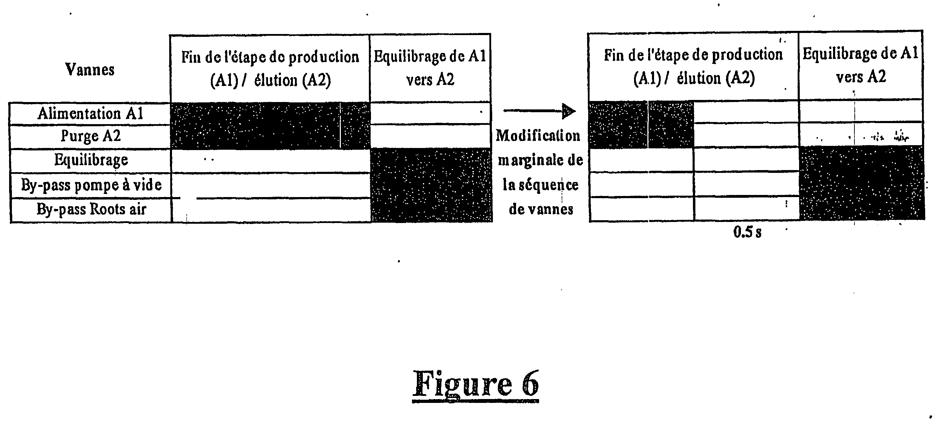

Ainsi, toujours dans le cas considéré ci-dessus, la modification de la séquence de vannes, schématisée en figure 6, suffit pour supprimer les transferts indésirables et pour recouvrer l'équilibre des profils de pression et les performances escomptées de l'unité.

Plus précisément, de la séquence d'ordres d'ouverture/fermeture donnés par l'automate aux vannes, la figure 6 extrait un détail correspondant à la fin de l'étape de production/élution et au début de l'équilibrage.

Les conventions utilisées sur cette figure 6 sont les suivantes : transition case vide/case pleine = ordre d'ouverture de la vanne ; transition case pleine/case vide = ordre de fermeture de la vanne.

La modification proposée consiste alors ainsi en une anticipation de l'ordre de fermeture des vannes qui doivent normalement se fermer à la fin de la production/élution.

Il est à noter, cependant, que, dans ce cas, compte-tenu du retard important à la fermeture des vannes d'alimentation de l'adsorbeur A1 et de purge de l'adsorbeur A2, il n'apparaît aucun pic de pression à l'aspiration de la pompe à vide PAV et au refoulement du compresseur à air ou roots R, ce qui garantit la sécurité de fonctionnement et le maintien de l'énergie spécifique (ES).

Le tableau 2 suivant revient, quant à lui, sur quelques uns des cas les plus défavorables du tableau 1 et présente les performances qu'il est possible de retrouver par simple modification de la séquence de vannes, c'est-à-dire par anticipation d'ouverture ou de fermeture des vannes critiques.

### Tableau II : Impact de la distribution des durées d'O/F sur les performances de l'unité VSA avec modification de la séquence de vannes

| Durée d'ouverture / fermeture des vannes (en secondes) | | | | | | Indice de production | Indice de ES |
|---|---|---|---|---|---|---|---|
| VA1 / VA2 | VP1 / VP2 | VPU1 / VPU2 | VE | VBP | VBR | Indice de production | Indice de ES |
| 0.5 | 0.5 | 0.5 | 0.5 | 0.5 | 0.5 | 100 | 100 |
| 1.5/05 | 1 | 0.5/1.5 | 1 | 1 | 1 | 98 | 99 |
| 0.5/1.5 | 1 | 0.5/1.5 | 1 | 1 | 1 | 100 | 99 |
| 1.5/05 | 0.5/1.5 | 0.5/1.5 | 1 | 1 | 1 | 99 | 99 |

Il ressort du Tableau II qu'un simple ajustement dans l'automate au démarrage de l'unité suffit à tenir compte d'une distribution de durées d'O/F hétérogène.

On montre de la sorte que les performances peuvent être maintenues tant que les durées d'O/F des vannes demeurent dans la plage [ $\mu$ - 0.5 s ; $\mu$ + 0.5 s ], avec $\mu$ désignant la valeur moyenne de la durée concernée et $\mu$ étant compris entre 0.5 s et 1.5 s.

Exemple 2 : Unité VSA à trois adsorbeurs et quatorze vannes

L'étude précédente a également été menée sur un système à 3 adsorbeurs, où le risque de perturbation du cycle par des durées d'actionnement singulières sur chaque adsorbeur est encore plus grand.

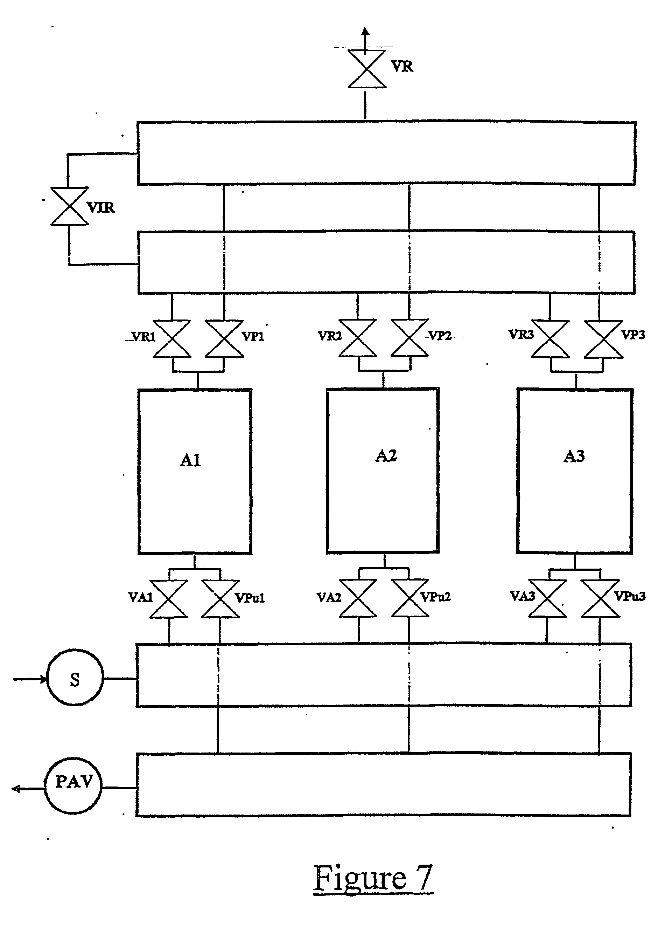

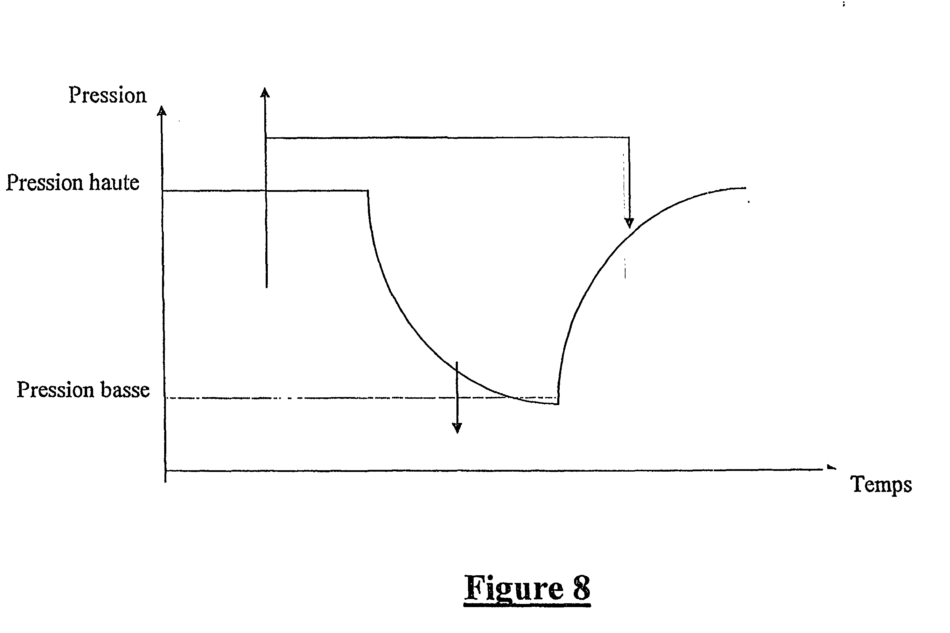

Le système VSA modélisé et représenté sur la figure 7 comporte :

- 3 adsorbeurs A1, A2 et A3 ;
- 1 pompe à vide PAV ;
- 1 compresseur S à air ou "soufflante" ;
- 3 vannes d'alimentation VA1, VA2 et VA3 contrôlant l'entrée d'air dans les adsorbeurs A1, A2 et A3, respectivement ;
- 3 vannes de production VP1, VP2 et VP3 contrôlant la sortie de gaz (oxygène) des adsorbeurs A1, A2 et A3, respectivement, lors des phases de production ;
- 3 vannes de purge VPU1, VPU2 et VPU3 contrôlant la sortie de gaz (azote) des adsorbeurs A1, A2 et A3, respectivement, lors des phases de purge ;
- 3 vannes de recompression VRC1, VRC2 et VRC3 contrôlant la recompression des adsorbeurs A1, A2 et A3, respectivement, lors des phases de recompression;
- 1 vanne de recompression intermédiaire VIR
- 1 vanne réseau VR de communication avec le réseau de distribution du gaz produit.

Chacune des 14 vannes du système VSA de la figure 7 est caractérisée par des durées d'ouverture et fermeture (O/F), qui constituent les paramètres de l'étude.

Le système VSA est soumis au cycle de pression schématisé sur la figure 7, laquelle représente les variations de pression (P) entre la pression haute du cycle (Phaute) et la pression basse du cycle (Pbasse), et les flux gazeux entrant et sortant de chacun des adsorbeurs A1, A2 et A3, au cours du temps.

Le système relativement complexe de vannes, schématisé sur la figure 7, côté production, ne vise qu'à permettre, par ouvertures successives, une recompression progressive par le gaz de production, sans utilisation de vannes commandées par régulateur.

En effet, les régulateurs commandant les actionneurs de vanne sont souvent une cause de non-fiabilité des unités VSA.

A l'instar de l'exemple 1 portant sur une unité VSA à deux adsorbeurs, les conclusions des simulations réalisées à cycle constant montrent clairement que les performances ne sont pas significativement altérées par l'utilisation de vannes relativement lentes.

Par exemple, pour un cycle de 45 s, les performances restent très comparables tant que l'ouverture ou la fermeture des vannes n'excède pas 1 s.

A ce stade, les simulations sont faites à cycle constant, sans aucune modification de la séquence d'ouvertures/ fermetures des vannes du système.

Comme précédemment, il convient maintenant de tenter d'identifier les conséquences de l'utilisation de vannes issues d'une population présentant des durées d'ouverture/fermeture hétérogènes et de valeur moyenne supérieure à celle du point de dimensionnement de l'unité VSA.

Là encore, on montre qu'une modification mineure de la séquence des vannes permet de compenser quasi-intégralement la perte de performances consécutives à une "mauvaise" distribution de vannes.

Cette modification de séquence repose, là encore, sur une anticipation, durant l'étape concernée, de l'ouverture et/ou la fermeture des vannes "déséquilibrées", de façon à supprimer tout transfert de matière inopportun entre adsorbeurs.

Les tableaux III et IV ci-après présentent les cas d'une distribution critique sur les vannes de purge, auxquelles les performances sont très sensibles (comme pour le système à deux adsorbeurs), laquelle est totalement compensée par une modification de la séquence des vannes (Tableau IV) sur le principe de la figure 6.

### Tableau III : Impact de la distribution des durées d'O/F sur les performances de l'unité VSA sans modification de la séquence de vannes

| Durée d'ouverture / fermeture des vannes (en secondes) | | | | Indice de production | Indice d'énergie spécifique |
|---|---|---|---|---|---|
| VA1/VA2/VA3 | VPU1/ VPU2/VPU3 | VP1/VP2/VP3 | VC1/VC2/VC3 | | |
| 0.5/0.5/0.5 | 0.5/0.5/0.5 | 0.5/0.5/0.5 | 0.5/0.5/0.5 | 100 | 100 |
| 1/1/1 | 0.5/1/1.5 | 1/1/1 | 1/1/1 | 87 | 117 |

### Tableau IV : Impact de la distribution des durées d'O/F sur les performances de l'unité VSA avec modification de la séquence de vannes

| Durée d'ouverture / fermeture des vannes (en secondes) | | | | Indice de production | Indice d'énergie spécifique |
|---|---|---|---|---|---|
| VA1/VA2/VA3 | VPU1/ VPU2/VPU3 | VP1/VP2/VP3 | VC1/VC2/VC3 | | |
| 0.5/0.5/0.5 | 0.5/0.5/0.5 | 0.5/0.5/0.5 | 0.5/0.5/0.5 | 100 | 100 |
| 1/1/1 | 0.5/1/1.5 | 1/1/1 | 1/1/1 | 99 | 101 |

Il apparaît que les conclusions sont les mêmes que pour le dispositif à deux adsorbeurs, à savoir que les performances peuvent être maintenues tant que les durées d'O/F des vannes demeurent dans la plage [μ - 0.5 s ; μ 0.5 s], avec μ désignant la valeur moyenne de la durée concernée et étant compris entre 0.5 s et 1.5 s.

Les exemples précédents montrent que le choix des vannes peut être réalisé avec une certaine latitude et que, de façon surprenante, il est possible d'utiliser des vannes ne garantissant que des durées d'ouverture/fermeture lentes, jusqu'à 1.5 s, et très hétérogènes (+/- 0.5 s)., et ce, tout en conservant des performances acceptables du point de vue industriel.

En d'autres termes, par simple ajustement de l'automate, l'hétérogénéité des vannes peut être sans conséquence sur les performances de l'unité VSA.

En outre, l'utilisation de vannes plus lentes permet d'améliorer la longévité des vannes, qui représentent une source importante de non-fiabilité d'une unité VSA.

De là, des actionnements plus " doux " des parties mécaniques assurant l'ouverture/fermeture de la vanne diminuent naturellement les risques de rupture de ces mécanismes.

Par ailleurs, la latitude plus importante sur la distribution des durées d'ouverture/fermeture spécifiée au fournisseur de vannes diminue le prix des vannes puisque le contrôle de la production peut être simplifié.

. Ainsi, augmenter les durées d'actionnement et la latitude sur la distribution de ces durées permet, d'un côté, d'augmenter la fiabilité de l'unité et de diminuer l'investissement et, de l'autre côté, ne dégrade significativement les performances qu'à partir de certaines valeurs, supérieures respectivement à 1.5 s et +/- 0.5 s.

Cette approche permet de dégager le meilleur compromis économique, atteint pour des vannes issues d'une population présentant une durée moyenne d'ouverture/fermeture p comprise entre 0.5 s et 2 s, et une distribution de durées d'ouverture/fermeture comprise entre [ μ - 0.2 s ; μ + 0.2 s] et [μ - 0.5 s ; μ + 0.5 s].

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

**Revendications**

1.   Installation PSA de séparation d'un flux gazeux fonctionnant par cycle de production et comportant au moins un adsorbeur et plusieurs vannes, **caractérisée en ce que** la durée moyenne de manoeuvre ($\mu$) desdites vannes est telle que :

$$0.5\ s < \mu < 2\ s$$

et la durée de manoeuvre ($\Delta t$) de chaque vanne est telle que :

$\mu - x < \Delta t < \mu + x$ avec : 0.1s < x < 0.5s.

2. Installation selon la revendication 1, **caractérisée en ce que** la durée moyenne de manoeuvre ($\mu$) des vannes est telle que 0.5 s < $\mu$ < 1.5 s, de préférence la durée moyenne de manoeuvre ($\mu$) est telle que 0.5 s < $\mu$ < 1 s.

3. Installation selon l'une des revendications 1 ou 2, **caractérisée en ce que** 0.1 s < x < 0.4 s, de préférence 0,1 s < x < 0.3 s.

4. Installation selon l'une des revendications 1 à 3, **caractérisée en ce qu'**elle comporte au moins 3 vannes, de préférence au moins 5 vannes.

5. Installation selon l'une des revendications 1 à 4, **caractérisée en ce qu'**elle comporte au moins deux adsorbeurs, de préférence deux ou trois adsorbeurs.

6. Installation selon l'une des revendications 1 à 5, **caractérisée en ce qu'**elle est de type VSA.

7. Installation selon l'une des revendications 1 à 6, **caractérisée en ce qu'**elle comprend, en outre, un système de contrôle des durées de manoeuvre des vannes.

8. Installation selon l'une des revendications 1 à 7, **caractérisée en ce qu'**elle comprend, en outre, un système d'adaptation de la séquence d'ordres de manoeuvre des vannes en fonction des durées de manoeuvre mesurées par ledit système de contrôle..

9. Utilisation d'une installation selon l'une des revendications 1 à 8 pour produire un flux gazeux comprenant plus de 50%, de préférence plus de 80%, d'au moins un gaz choisi dans le groupe formé par l'oxygène, l'azote et l'hydrogène.

10. Utilisation d'une installation selon l'une des revendications 1 à 8 pour produire un flux gazeux comprenant plus de 80% d'oxygène, de préférence plus de 90% d'oxygène, ledit oxygène étant envoyé vers une installation consommatrice d'oxygène choisie parmi un four à combustion, une unité de fabrication de pâte à papier et une unité de traitement d'eau.

**Claims**

1. PSA plant for separating a gas stream, operating in a production cycle and comprising at least one adsorber and several valves, **characterized in that** the average operating time ($\mu$) of the said valves is such that:

$$0.5 \text{ s} < \mu < 2 \text{ s}$$

and the operating time ($\Delta t$) of each valve is such that:

$$\mu - x < \Delta t < \mu + x, \text{ with } 0.1 \text{ s} < x < 0.5 \text{ s}.$$

2. Plant according to Claim 1, **characterized in that** the average operating time ($\mu$) of the valves is such that 0.5 s < $\mu$ < 1.5 s, preferably the average operating time ($\mu$) is such that 0.5 s < $\mu$ < 1 s.

3. Plant according to either of Claims 1 and 2, **characterized in that** 0.1 s < x < 0.4 s, preferably 0.1 s < x < 0.3 s.

4. Plant according to one of Claims 1 to 3, **characterized in that** it includes at least 3 valves, preferably at least 5 valves.

5. Plant according to one of Claims 1 to 4, **characterized in that** it includes at least two adsorbers, preferably two or three adsorbers.

**6.** Plant according to one of Claims 1 to 5, **characterized in that** it is of the VSA type.

**7.** Plant according to one of Claims 1 to 6, **characterized in that** it furthermore includes a system for controlling the operating times of the valves.

**8.** Plant according to one of Claims 1 to 7, **characterized in that** it furthermore includes a system for modifying the sequence of commands to operate the valves as a function of the operating times measured by the said control system.

**9.** Use of a plant according to one of Claims 1 to 8 to produce a gas stream comprising more than 50%, preferably more than 80%, of at least one gas chosen from the group formed by oxygen, nitrogen and hydrogen.

**10.** Use of a plant according to one of Claims 1 to 8 to produce a gas stream comprising more than 80% oxygen, preferably more than 90% oxygen, the said oxygen being sent to an oxygen-consuming plant chosen from a combustion furnace, a paper-pulp manufacturing unit and a water treatment unit.

**Patentansprüche**

**1.** Druckwechseladsorptionsvorrichtung zur Trennung einen Gasstroms, die je Produktionszyklus arbeitet und zumindest einen Adsorber und mehrere Ventile umfasst, **dadurch gekennzeichnet, dass** für die mittlere Betätigungszeit ($\mu$) der Ventile gilt

$$0,5\ s < \mu < 2\ s$$

und für die Betätigungszeit ($\Delta t$) jedes Ventils gilt

$$\mu - x < \Delta t < \mu + x \text{ mit } 0,1\ s < x\ 0,5\ s.$$

**2.** Vorrichtung nach Anspruch 1, **dadurch gekennzeichnet, dass** für die mittlere Betätigungszeit ($\mu$) der Ventile 0,5 s < $\mu$ < 1,5 s gilt und für die mittlere Betätigungszeit (p) vorzugsweise 0,5 s < $\mu$ < 1 s gilt.

**3.** Vorrichtung nach Anspruch 1 oder 2, **dadurch gekennzeichnet, dass** 0,1 s < x < 0,4 s und vorzugsweise 0,1 s < x < 0,3 s gilt.

**4.** Vorrichtung nach einem der Ansprüche 1 bis 3, **dadurch gekennzeichnet, dass** sie zumindest 3 Ventile und vorzugsweise zumindest 5 Ventile umfasst.

**5.** Vorrichtung nach einem der Ansprüche 1 bis 4, **dadurch gekennzeichnet, dass** sie zumindest zwei Adsorber und vorzugsweise zwei oder drei Adsorber umfasst.

**6.** Vorrichtung nach einem der Ansprüche 1 bis 5, **dadurch gekennzeichnet, dass** sie vom VSA-Typ ist.

**7.** Vorrichtung nach einem der Ansprüche 1 bis 6, **dadurch gekennzeichnet, dass** sie außerdem ein System zur Steuerung der Betätigungszeiten der Ventile umfasst.

**8.** Vorrichtung nach einem der Ansprüche 1 bis 7, **dadurch gekennzeichnet, dass** sie außerdem ein System zur Adaption der Sequenz der Betätigungskommandos der Ventile in Abhängigkeit von den durch das Steuersystem gemessenen Betätigungszeiten umfasst.

**9.** Verwendung einer Anlage nach einem der Ansprüche 1 bis 8 zur Produktion eines Gasstroms mit mehr als 50% und vorzugsweise mehr als 80% zumindest eines Gases, das Sauerstoff, Stickstoff oder Wasserstoff sein kann.

**10.** Verwendung einer Anlage nach einem der Ansprüche 1 bis 8 zur Produktion eines Gasstroms mit mehr als 80% Sauerstoff und vorzugsweise mehr als 90% Sauerstoff, wobei der Sauerstoff zu einer Sauerstoff verbrauchenden Anlage geleitet wird, die ein Verbrennungsofen,- eine Fabrikationsanlage für Papiermasse oder eine Wasserauf-

bereitungsanlage sein kann.

**Figure 1**

## Figure 2

**Figure 3**

EP 0 998 969 B1

Figure 4

**Figure 5**

EP 0 998 969 B1

Figure 6

Figure 7

**Figure 8**

EP 0 998 969 B1